# EUROPEAN PATENT APPLICATION

(11) **EP 4 458 938 A1**
(43) Date of publication of application: **06.11.2024**
(21) Application number: 22915669.0
(22) Date of filing: 07.12.2022
(51) Int. Cl.: C12G 3/06

(54) **ALCOHOLIC BEVERAGE CONTAINING LIMONENE**

(30) Priority: 27.12.2021 JP 2021213069
(71) Applicant: Suntory Holdings Limited, Osaka 530-8203 (JP)
(72) Inventor: YOSHIHARA, Kazuki, Kawasaki-shi, Kanagawa 211-0067 (JP); OSADA, Tomoya, Tokyo 135-8631 (JP); ZUSHI, Akane, Kawasaki-shi, Kanagawa 211-0067 (JP); MATSUMOTO, Takehiro, Kawasaki-shi, Kanagawa 211-0067 (JP); ITO, Yu, Osaka-shi, Osaka 552-0022 (JP); USHIKU, Jun, Kawasaki-shi, Kanagawa 211-0067 (JP)
(74) Representative: Vossius & Partner Patentanwälte Rechtsanwälte mbB
(86) International application number: PCT/JP2022/045060
(87) International publication number: WO 2023/127438

(57) **Abstract**

The present invention addresses the problem of suppressing the irritation of the tingling after-taste generated by alcohol and limonene in an alcoholic beverage containing limonene. The present invention uses a specific amount of at least one compound selected from the group consisting of cinnamaldehyde, eugenol, 2-phenyl-2-butenal, and carvacrol.

## Description

### TECHNICAL FIELD

The present invention relates to an alcoholic beverage containing limonene and at least one compound selected from the group consisting of cinnamaldehyde, eugenol, 2-phenyl-2-butenal, and carvacrol and a method related thereto.

### BACKGROUND ART

Flavor components derived from citruses and represented by limonene and the like are blended into various foods and drinks. Since flavor components of citruses can impart a peculiar refreshing feeling to beverages in combination with moderate sour-sweetness and fresh fragrance peculiar to citrus fruits, beverages to which flavors of citruses are imparted are preferred by many people.

PTL 1 discloses that a problem is that if limonene is blended into alcoholic beverages, limonene and alcohol particularly increase the stimulus of a tingling aftertaste, and that the problem can be solved with eriocitrin.

### CITATION LIST

### PATENT LITERATURE

PTL 1: Japanese Patent Laid-Open No. 2019-205379

### SUMMARY OF INVENTION

### TECHNICAL PROBLEM

Although it is effective to use eriocitrin for solving the above-mentioned problem caused by alcohol and limonene, eriocitrin is not necessarily versatile. For example, it is known that eriocitrin is a yellow dye. Accordingly, if the yellow color is unpreferable, eriocitrin cannot be used. The addition of eriocitrin at high concentration results in astringency. Furthermore, since eriocitrin is a component contained in citrus raw materials themselves, an increase in the amounts thereof may make it difficult to balance the flavors and the functions of the entire beverages.

An object of the present invention is to provide a technique substituting for eriocitrin for reducing stimulus of a tingling aftertaste caused by alcohol and limonene.

### SOLUTION TO PROBLEM

The present inventors have found that cinnamaldehyde, eugenol, 2-phenyl-2-butenal, and carvacrol can reduce the stimulus of a tingling aftertaste particularly strongly felt in the case where limonene, which is a flavor component of citruses, and alcohol coexist, and completed the present invention.

The present invention relates to, but not limited to, the following.
(1) An alcoholic beverage, containing limonene in an amount of 1 to 70 ppm and at least one compound selected from the group consisting of cinnamaldehyde, eugenol, 2-phenyl-2-butenal, and carvacrol, wherein the total content of the at least one compound is 0.1 to 7.0 ppm.
(2) The alcoholic beverage according to (1), containing limonene in an amount of 5 to 50 ppm.
(3) The alcoholic beverage according to (1) or (2), wherein an alcohol content is 1 to 15v/v%.
(4) A method for suppressing stimulus of a tingling aftertaste in an alcoholic beverage containing limonene in an amount of 1 to 70 ppm, including:
   mixing raw materials so that the beverage contains at least one compound selected from the group consisting of cinnamaldehyde, eugenol, 2-phenyl-2-butenal, and carvacrol, and the total content of the at least one compound in the beverage is 0.1 to 7.0 ppm.

### ADVANTAGEOUS EFFECTS OF INVENTION

According to the present invention, cinnamaldehyde, eugenol, 2-phenyl-2-butenal, and carvacrol in an amount in a specified range can reduce the stimulus of a tingling aftertaste caused by limonene and alcohol in an alcoholic beverage containing limonene.

### DESCRIPTION OF EMBODIMENTS

Hereinafter, a beverage of the present invention and a method related thereto will be described.

The "ppm" as used herein means ppm by weight/volume (w/v), and this is synonymous with "mg/L" unless otherwise specified.

### (Alcohol)

The beverage of the present invention is an alcoholic beverage, namely a beverage containing alcohol. The term "alcohol" described herein means ethanol unless otherwise specified.

The alcohol content of the beverage of the present invention is, but not limited to, preferably 15v/v% or less, more preferably 13v/v% or less, and further preferably 11v/v% or less. Since alcohol at a content above 15v/v% strengthens the stimulus of the tingling aftertaste, a large amount of cinnamaldehyde, eugenol, 2-phenyl-2-butenal, or carvacrol is necessary for the reduction thereof, and may influence the tastiness of a beverage. The lower limit value of the alcohol content is, but not limited to, preferably 1v/v% or more, more preferably 2v/v% or more, and further preferably 3v/v% or more. The alcohol content of the alcoholic beverage of the present invention is preferably 1 to 15v/v% and more preferably 4 to 9v/v%.

The alcohol content of the beverage herein can be measured by any known method, for example, with a vibrating densimeter. Specifically, carbon dioxide is removed from the beverage by filtration or ultrasonic waves as needed to prepare a sample. The sample is subjected to steam distillation. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007).

Alcohol may be incorporated into the beverage of the present invention by any means. The beverage of the present invention typically contains alcohol raw material, and thereby contains alcohol. Examples of the alcohol raw material include, but not particularly limited to, spirits (rum, vodka, gin, tequila, or the like), liqueurs, whiskey, brandy, and shochu. Furthermore, the alcohol raw material may be brewage such as beer. These alcohol raw materials can be used alone or in combination.

The type of the alcoholic beverage of the present invention is, but not particularly limited to, preferably a highball, chuhai (shochu mixed with soda), a cocktail, a sour, or the like. If the terms "highball" and "chuhai" are used with reference to the beverage of the present invention, the terms mean beverages containing water, distilled liquor, and carbon dioxide. A highball and a chuhai may further contain fruit juice. If the term "sour" is used with reference to the beverage of the present invention, the term means a beverage containing a spirit, acidulous fruit juice of citruses or the like, a sweet component, and carbon dioxide. If the term "cocktail" is used with reference to the beverage of the present invention, the term means an alcoholic beverage produced by mixing fruit juice and the like into base liquor.

### (Limonene)

Although limonene has the D-form or the L-form, "limonene" as used herein means D-limonene.

The alcoholic beverage of the present invention contains limonene in an amount of 1 to 70 ppm. Limonene is a monoterpene hydrocarbon compound, and has a sweet and sour scent and freshness evoking citrus fruits.

The alcoholic beverage of the present invention contains limonene in an amount of preferably 1 to 50 ppm and more preferably 1 to 30 ppm. The content of the limonene may be 5 to 50 ppm. If the concentration of limonene is low, the stimulus of a tingling aftertaste caused by the coexistence of limonene and alcohol is weak, and the effect of masking the stimulus of a tingling aftertaste of the present invention may not be strongly felt. Meanwhile, if the concentration of limonene is high, the flavor of limonene itself may be too strong.

Limonene contained in the beverage can be quantified by a known method, for example, the following method. It is possible to analyze it, by preparing a calibration curve using limonene beforehand, and subjecting a liquid composition as the beverage sample to gas chromatography/mass spectrometry (GC-FID) under the following conditions.
- Treatment before analysis: An Extrelut NT-1 column is filled with the sample, followed by extraction with ether.
- Analyzer: GC 6890N (Agilent Technologies)
- Column: HP-ULTRA 2 (Inner diameter: 0.32 mm, Length: 50 m, Film thickness: 0.52 µm)
- Carrier gas: Helium
- Flow rate: 2.2 mL/minute
- Injection port: Splitless
- Injection port temperature: 250°C
- Oven temperature: The temperature is raised at 5°C/minute from 45°C (1.5 minutes) to 230°C (2 minutes).
- Detector: FID
- Detector temperature: 260°C
- Injection volume: 2.0 µL

### (Cinnamaldehyde, eugenol, 2-phenyl-2-butenal, and carvacrol)

The beverage of the present invention contains at least one compound selected from the group consisting of cinnamaldehyde, eugenol, 2-phenyl-2-butenal, and carvacrol, and this reduces the stimulus the tingling aftertaste caused by limonene and alcohol.

Cinnamaldehyde is a compound that can be obtained from cinnamon, which is a crude drug, or the like. Cinnamaldehyde has the E-form and the Z-form, which are geometrical isomers, and "cinnamaldehyde" as used herein is the E-form thereof.

Eugenol, which is one phenylpropanoid, is contained in cloves as a natural product.

Carvacrol is a monoterpene phenol, and it is known that carvacrol has an antimicrobial effect.

Then, 2-phenyl-2-butenal has the E-form and the Z-form, which are geometrical isomers, and either isomer may be used in the present invention, and the mixture thereof may be used.

The beverage of the present invention contains at least one compound selected from the group consisting of cinnamaldehyde, eugenol, 2-phenyl-2-butenal, and carvacrol, and the total content of the at least one compound is 0.1 to 7.0 ppm and preferably 0.5 to 5 pm. If the total content of these compounds is in such a range, the stimulus of the tingling aftertaste caused by the coexistence of limonene and alcohol can be effectively reduced, the compounds scarcely influence the flavor of the beverage, and the tastiness as a beverage is preserved.

In an embodiment, the content of cinnamaldehyde in the beverage of the present invention is 0.1 to 7.0 ppm or 0.5 to 5 ppm.

In an embodiment, the content of eugenol in the beverage of the present invention is 0.1 to 7.0 ppm or 0.5 to 5 ppm.

In an embodiment, the content of 2-phenyl-2-butenal in the beverage of the present invention is 0.1 to 7.0 ppm or 0.5 to 5 ppm.

In an embodiment, the content of carvacrol in the beverage of the present invention is 0.1 to 7.0 ppm or 0.5 to 5 ppm.

Any known method may be used for measuring the contents of these compounds in the beverage. For example, a liquid composition as a beverage sample can be subjected to gas chromatography/mass spectrometry for analysis. An example thereof will be shown below.
• Treatment before analysis: First, 1 mL of the sample solution is collected, and 5 µL of an ethanol solution containing cyclohexanol as an internal standard substance in an amount of 1000 ppm is added. After the obtained solution is well mixed, 100 µL of the mixed solution is collected in a 10-mL vial to obtain an analysis sample. The analysis sample is subjected to GC/MS measurement, and the quantitative value is determined by the internal reference method.
• Gas chromatograph: GC8890 (Agilent Technologies)
• Mass spectrometer: MSD5977B (Agilent Technologies)
• Column: HP-INNOWAX (Agilent Technologies), Inner diameter: 0.25 mm; Length: 60 m; Film thickness: 0.5 µm
• Mobile phase: He (flow speed: 1.0 mL/minute, constant flow rate)
• Method for introducing sample: FE-DHS (full evaporation dynamic head space)
• Oven temperature: 40°C (1 minute) => 4°C/minute => 230°C (3 minutes)
• Transfer line temperature: 220°C
• Ion source temperature: 230°C
• Quadrupole temperature: 150°C
•

| | |
|---|---|
| Ions to be quantified: | Eugenol: m/z = 164 |
| | Cinnamaldehyde: m/z = 131 |
| | Carvacrol: m/z = 150 |
| | 2-phenyl-2-butenal: m/z = 146 |

### (Carbon dioxide)

The beverage of the present invention may contain carbon dioxide. Carbon dioxide can be incorporated into the beverage by a method commonly known to those skilled in the art. Although the method is not limited to the following, for example, carbon dioxide may be dissolved in the beverage under pressure, carbon dioxide may be mixed with the beverage in the piping of a mixer such as a carbonator manufactured by GEA, the beverage may be sprayed in a tank filled with carbon dioxide to make the beverage absorb carbon dioxide, or the beverage may be mixed with carbonated water. These means are appropriately used to regulate the carbon dioxide pressure.

If the beverage of the present invention contains carbon dioxide, the carbon dioxide pressure thereof is, but not particularly limited to, preferably 0.7 to 4.5 kgf/cm² and more preferably 0.8 to 2.8 kgf/cm². In the present invention, the carbon dioxide pressure can be measured with the gas volume measuring apparatus GVA-500A, manufactured by Kyoto Electronics Manufacturing Co., Ltd. For example, the sample temperature is adjusted to 20°C, gas in the air in the container in the gas volume measuring apparatus is removed (snift), followed by the shaking, and the carbon dioxide pressure is then measured. The carbon dioxide pressure as used herein means carbon dioxide pressure at 20°C unless otherwise specified.

### (Fruit juice)

The beverage of the present invention may contain fruit juice. The fruit juice may be in any form of straight juice, which is juice squeezed from fruits to be used as it is, concentrated juice, which is obtained by concentrating the squeezed juice, and the like. Transparent fruit juice or cloudy fruit juice can also be used. Whole fruit juice, obtained by crushing whole fruits including the skins and removing only particularly coarse hard solid matter such as seed therefrom, fruit puree, obtained by straining fruits, or fruit juice into which the pulp of dried fruits is crushed or that is extracted from the pulp can also be used.

Examples of the type of fruit juice include, but not limited to, citrus juices (fruit juices of oranges such as Valencia oranges and navel orange; grapefruits such as grapefruit; flavorful acid citruses such as lemon, lime, flat lemon, sour orange, *Citrus junos, Citrus sphaerocarpa, Citrus sudachi,* citron, and fingered citron; miscellaneous citruses such as *Citrus natsudaidai, Citrus hassaku, Citrus tamurana,* sweetie, and Siranuhi; buntans such as *Citrus iyo* and *Citrus tankan;* tangerine oranges such as mandarin oranges, *Citrus unshiu, Citrus reticulata* var *poonensis,* and *Citrus kinokuni*; and kumquats such as *Citrus japonica*)*,* apple juice, grape juice, peach juice, tropical fruit juices (pineapple juice, guava juice, banana juice, mango juice, acerola juice, lychee juice, papaya juice, passion fruit juice, and the like), fruit juices of other fruits (*Prunus mume* juice, Japanese pear juice, apricot juice, *Prunus salicina* juice, berry juice, kiwi fruit juice, and the like), strawberry juice, and melon juice. These fruit juice may be used alone or in combination of two or more.

The content of the fruit juice in the beverage of the present invention is not particularly limited, and is typically 0 to 100w/w%, less than 10w/w%, or 0 to 9w/w% in terms of percent fruit juice content.

In the present invention, the "percent fruit juice content" in a beverage shall be calculated according to the conversion expression mentioned below using the amount (g) of a fruit juice added to 100 g of a sample. Further, calculation of concentration factor shall be made as per the JAS guidelines, with the proviso that the sugar refractometer index for a sugar, honey, or the like added to a fruit juice is excluded. Percent fruit juice content (w/w%) = <Amount of fruit juice added (g)> × <concentration factor>/100 mL/<specific gravity of beverage> × 100

### (Flavors of citruses)

One of the preferable aspects of the beverage of the present invention is a citrus beverage. The "citrus" beverage as used in the present invention means a beverage having a flavor of a citrus, and refers to a beverage having a flavor suggestive of the citrus while the beverage is drunk.

Examples of citruses include oranges such as Valencia oranges and navel orange; grapefruits such as grapefruit; flavorful acid citruses such as lemon, lime, flat lemon, sour orange, *Citrus junos, Citrus sphaerocarpa, Citrus sudachi,* citron, and fingered citron; miscellaneous citruses such as *Citrus natsudaidai, Citrus hassaku, Citrus tamurana,* sweetie, and Siranuhi; buntans such as *Citrus iyo* and *Citrus tankan*; tangerine oranges such as mandarin oranges, *Citrus unshiu, Citrus reticulata* var *poonensis,* and *Citrus kinokuni;* and kumquats such as *Citrus japonica.*

Examples of the beverage having the flavor of the citrus include a beverage containing a fruit or fruit juice of a citrus and a beverage using part of a citrus itself. If a flavor of a citrus fruit is felt, the beverage may contain no fruit juice, or may be, for example, a beverage containing extract containing fragrance components extracted from a citrus or a beverage containing a flavoring in which fragrance components characteristic of citrus fruits are artificially reproduced.

Fruit juice other than citrus juice may be used in combination for the alcoholic beverage according to the present invention. The fruit juice to be used in combination with citrus fruit juice is not particularly limited, and one or more fruit juices can be used. The amount of the fruit juice blended to be used in combination is not limited, and may be in the above-mentioned range.

### (pH)

In one embodiment, the pH of the alcoholic beverage according to the present invention is 2.3 to 4.5, 2.8 to 4.3, or 3.3 to 4.1. For the adjustment of the pH of the beverage, the adjustment method is not particularly limited, and the pH can be adjusted with a substance such as citric acid or trisodium citrate that is commonly used for adjusting the pHs of beverages. The contents of other components (for example, fruit juice and the like) can be regulated to adjust the pH.

### (Absorbance)

None of cinnamaldehyde, eugenol, 2-phenyl-2-butenal, and carvacrol strongly colors beverages. That is, the present invention does not have a great influence on the original color of a beverage into which the components are blended.

For example, if the beverage is originally colorless or light-colored, the present invention does not change the color greatly. In one embodiment, the beverage of the present invention is accordingly colorless or light-colored. This property can be defined by the absorbance at wavelength of 550 nm measured, for example, with an ultraviolet-visible spectrophotometer (UV-1600 (SHIMADZU CORPORATION) or the like). The absorbance at a wavelength of 550 nm of the beverage of the present invention in this aspect is specifically less than 0.45, preferably 0.40 or less, more preferably 0.35 or less, more preferably 0.30 or less, more preferably 0.25 or less, and more preferably 0.20 or less. Although the lower limit value of the absorbance is not particularly important, for example, the absorbance may be 0 or more, 0.01 or more, 0.02 or more, 0.05 or more, 0.07 or more, or 0.10 or more.

### (Other components)

As long as the effect of the present invention is not prevented, various additives may be blended into the beverage of the present invention in the same way as into common beverages. Examples of the various additives include an acidulant, flavorings, vitamins, dyes, an antioxidant, an emulsifier, a preservative, seasonings, extract, a pH adjustor, a thickener, and a quality stabilizer.

### (Packaged beverage)

The beverage of the present invention can be provided in a packaged form. The form of the container includes, but not limited to, metal containers such as cans, PET bottles, cartons, bottles, and pouches. For example, a sterilized packaged product can be produced by a method involving filling a container with the beverage of the present invention, followed by heat sterilization such as retort sterilization or a method involving sterilizing the beverage and filling a container with the sterilized beverage.

### (Related method)

In an aspect, the present invention relates to a method for suppressing the stimulus of a tingling aftertaste in an alcoholic beverage containing limonene in an amount of 1 to 70 ppm. The method includes mixing raw materials so that the beverage contains at least one compound selected from the group consisting of cinnamaldehyde, eugenol, 2-phenyl-2-butenal, and carvacrol, and the total content of the at least one compound in the beverage is 0.1 to 7.0 ppm.

The method may further include a step of blending the raw materials so that the content of limonene in the beverage is 1 to 70 ppm.

Examples of the raw materials are at least one compound selected from the group consisting of cinnamaldehyde, eugenol, 2-phenyl-2-butenal, and carvacrol; limonene; plant extract containing at least one of the components; water; and the like.

The types of the components in the beverage, the contents thereof, the pH, the carbon dioxide pressure, the preferable ranges thereof, and the methods for the adjustment thereof are as described above with respect to the beverage of the present invention, or are obvious from the descriptions. The timings are not limited, either.

### (Numerical range)

In the description for clarification, the numerical ranges as used herein includes their endpoints, namely the lower limit values and the upper limit values.

### EXAMPLES

Hereinafter, the present invention will be described in more detail while showing specific experimental examples, but the present invention is not limited to the following experimental examples.

### (Experiment 1) Production and evaluation of alcoholic beverages containing limonene

The description of Experiment 1 of PTL 1, which confirmed the "stimulus of a tingling aftertaste" generated by limonene and alcohol, will be cited below.

Beverages at an alcohol content of 0 to 15v/v% were produced based on the following table. Alcohol (neutral spirit, alcohol content: 59v/v%) and limonene (NACALAI TESQUE, INC., D-limonene) were specifically added to pure water sequentially to produce packaged beverages.

The obtained beverages were each evaluated for the "strength of the stimulus of the tingling aftertaste" caused by limonene on a scale of one to six by a sensory test using a scoring method. Six well-trained sensory evaluators specifically evaluated based on the following criteria. (a) Pure water and (b) a solution containing limonene in an amount of 30 ppm and alcohol at a content of 15v/v% were provided. The sensory evaluators confirmed that (a) was evaluated as 6 points, and (b) was evaluated as 1 point, and sensory test was performed.

### "Strength of stimulus of tingling aftertaste"

- 6 points: Not felt at all (pure water)
- 5 points: Scarcely felt
- 4 points: Not quite felt
- 3 points: Slightly felt
- 2 points: Felt
- 1 point: Strongly felt (beverage containing limonene in an amount of 30 ppm and alcohol at a content of 15v/v%)

The average point was then calculated from the evaluation points of the six sensory evaluators, and the "strength of the stimulus of the tingling aftertaste" was evaluated according to the average point as follows.
"-": The average point is 5 points or more.
"±": The average point is 4 points or more and less than 5 points.
"+": The average point is 3 points or more and less than 4 points.
"++": The average point is 2 points or more and less than 3 points.
"+++": The average point is 1 point or more and less than 2 points.

**[Table 1]**

| Limonene concentration (ppm) | 0 | 0.5 | 10 | 15 | 20 | 30 | 40 | 50 | 60 | 70 |
|---|---|---|---|---|---|---|---|---|---|---|
| Alcohol content 0v/v% | - | - | - | - | ± | ± | ± | ± | ± | ± |
| Alcohol content 5v/v% | - | + | + | ++ | +++ | +++ | +++ | +++ | +++ | +++ |
| Alcohol content 10v/v% | - | + | + | +++ | +++ | +++ | +++ | +++ | +++ | +++ |
| Alcohol content 15v/v% | - | + | + | +++ | +++ | +++ | +++ | +++ | +++ | +++ |

As is apparent from the above-mentioned table, it was found that if limonene is present in a beverage containing alcohol, the stimulus of the tingling aftertaste was felt particularly markedly. If the content of alcohol increased and if the content of limonene increased, the stimulus of the tingling aftertaste tended to be strengthened.

### (Experiment 2) Effect of cinnamaldehyde

The blending was performed as shown in the following table in the same way as in Experiment 1 to prepare alcoholic beverages. In the present experiment, cinnamaldehyde (NACALAI TESQUE, INC.) was however further added to produce packaged beverages.

Each of the obtained beverages was evaluated for the "strength of the stimulus of the tingling aftertaste" in the same way as in Experiment 1. In the present experiment, the beverage was furthermore comprehensively evaluated for the "tastiness as a beverage" from the viewpoint of whether a flavor typical of a citrus was felt or whether an unnatural flavor, or a foreign taste or an offensive smell was felt based on the following criteria.

### "Tastiness as beverage"

- 6 points: Very satisfactory
- 5 points: Excellent
- 4 points: Preferable
- 3 points: Acceptable as a product
- 2 points: Slightly poor
- 1 point: Poor

The average point was calculated from the evaluation points of the six sensory evaluators, and the "tastiness as a beverage" was evaluated as follows. If the beverage was evaluated as "+" or higher, the beverage was accepted as a product. If the beverage was evaluated as "++" or higher, the beverage was excellent as a product.
"+++": The average point is 5 points or more.
"++": The average point is 4 points or more and less than 5 points.
"+": The average point is 3 points or more and less than 4 points.
"±": The average point is 2 points or more and less than 3 points.
"-": The average point is 1 point or more and less than 2 points.

The following tables show the results together with the absorbance at a wavelength of 550 nm (measured with a UV-1800 (SHIMADZU CORPORATION)).

**[Table 2-1]**

| Alcoholic beverage (Alcohol content: 15v/v%) | | | | | |
|---|---|---|---|---|---|
| Limon ene (ppm) | Cinnamal dehyde (ppm) | Stimulus of tingling aftertaste | Tastiness as beverage | Absorbance (λ = 550 nm) | Comment |
| 0.5 | 0.05 | +++ | + | 0.000 | The effect of masking tingling stimulus is not felt. |
| 1 | 0.1 | + | + | 0.000 | The effect of masking tingling stimulus is slightly felt. |
| 5 | 0.5 | ± | ++ | 0.004 | The effect of masking tingling stimulus is felt. The thickness is also slightly felt, and the beverage is tasty. |
| 10 | 1 | ± | +++ | 0.004 | The effect of masking tingling stimulus is felt. The thickness is also felt, and the beverage is tasty. |
| 20 | 2 | ± | +++ | 0.004 | The effect of masking tingling stimulus is felt. The thickness is also felt, and the beverage is tasty. |
| 30 | 3 | ± | +++ | 0.007 | The effect of masking tingling stimulus is felt. The thickness is also felt, and the beverage is tasty. |
| 40 | 4 | ± | +++ | 0.008 | The effect of masking tingling stimulus is felt. The thickness is also felt, and the beverage is tasty. |
| 50 | 5 | ± | ++ | 0.011 | The effect of masking tingling stimulus is felt. The thickness is also slightly felt, and the beverage is tasty. |
| 70 | 7 | ± | + | 0.065 | The effect of masking tingling stimulus is felt. The beverage remains tasty. |
| 80 | 8 | ± | ± | 0.098 | Although the effect of masking tingling stimulus is felt, a cinnamon-like scent is too strong. |
| 70 | 0.1 | + | + | 0.065 | The effect of masking tingling stimulus is slightly felt. |
| 1 | 7 | + | + | 0.000 | The effect of masking tingling stimulus is felt. The beverage remains tasty. |

**[Table 2-2]**

| Alcoholic beverage (Alcohol content: 5v/v%) | | | | | |
|---|---|---|---|---|---|
| Limon ene concen tration (ppm) | Cinnamal dehyde (ppm) | Stimulus of tingling aftertaste | Tastiness as beverage | Absorbance (λ = 550 nm) | Comment |
| 0.5 | 0.05 | +++ | + | 0.000 | The effect of masking tingling stimulus is not felt. |
| 1 | 0.1 | + | + | 0.001 | The effect of masking tingling stimulus is slightly felt. |
| 5 | 0.5 | ± | ++ | 0.001 | The effect of masking tingling stimulus is felt. The thickness is also slightly felt, and the beverage is tasty. |
| 10 | 1 | ± | +++ | 0.001 | The effect of masking tingling stimulus is felt. The thickness is also felt, and the beverage is tasty. |
| 20 | 2 | ± | +++ | 0.012 | The effect of masking tingling stimulus is felt. The thickness is also felt, and the beverage is tasty. |
| 30 | 3 | ± | +++ | 0.049 | The effect of masking tingling stimulus is felt. The thickness is also felt, and the beverage is tasty. |
| 40 | 4 | ± | +++ | 0.098 | The effect of masking tingling stimulus is felt. The thickness is also felt, and the beverage is tasty. |
| 50 | 5 | ± | ++ | 0.140 | The effect of masking tingling stimulus is felt. The thickness is also slightly felt, and the beverage is tasty. |
| 70 | 7 | ± | + | 0.217 | The effect of masking tingling stimulus is felt. The beverage remains tasty. |
| 80 | 8 | ± | ± | 0.265 | Although the effect of masking tingling stimulus is felt, a cinnamon-like scent is too strong. |

As is apparent from the above-mentioned table, an excellent effect was obtained in a wide range of the alcohol content in a specified range of the cinnamaldehyde content.

### (Experiment 3) Effect of eugenol

The same experiment as Experiment 2 was performed except that eugenol was used instead of cinnamaldehyde. The following tables show the results together with the absorbance at a wavelength of 550 nm (measured with a UV-1800 (SHIMADZU CORPORATION)).

**[Table 3-1]**

| Alcoholic beverage (Alcohol content: 15v/v%) | | | | | |
|---|---|---|---|---|---|
| Limon ene concen tration (ppm) | Eugenol (ppm) | Stimulus of tingling aftertaste | Tastiness as beverage | Absorbance (λ = 550 nm) | Comment |
| 0.5 | 0.05 | +++ | + | 0.000 | The effect of masking tingling stimulus is not felt. |
| 1 | 0.1 | + | + | 0.000 | The effect of masking tingling stimulus is slightly felt. |
| 5 | 0.5 | ± | ++ | 0.004 | The effect of masking tingling stimulus is felt. The thickness is also slightly felt, and the beverage is tasty. |
| 10 | 1 | ± | +++ | 0.004 | The effect of masking tingling stimulus is felt. The thickness is also felt, and the beverage is tasty. |
| 20 | 2 | ± | +++ | 0.004 | The effect of masking tingling stimulus is felt. The thickness is also felt, and the beverage is tasty. |
| 30 | 3 | ± | +++ | 0.007 | The effect of masking tingling stimulus is felt. The thickness is also felt, and the beverage is tasty. |
| 40 | 4 | ± | +++ | 0.008 | The effect of masking tingling stimulus is felt. The thickness is also felt, and the beverage is tasty. |
| 50 | 5 | ± | ++ | 0.011 | The effect of masking tingling stimulus is felt. The thickness is also slightly felt, and the beverage is tasty. |
| 70 | 7 | ± | + | 0.065 | The effect of masking tingling stimulus is felt. The beverage remains tasty. |
| 80 | 8 | ± | ± | 0.098 | Although the effect of masking tingling stimulus is felt, a mint-like flavor is too strong. |
| 70 | 0.1 | + | + | 0.065 | The effect of masking tingling stimulus is slightly felt. |
| 1 | 7 | + | + | 0.000 | The effect of masking tingling stimulus is felt. The beverage remains tasty. |

**[Table 3-2]**

| Alcoholic beverage (Alcohol content: 5v/v%) | | | | | |
|---|---|---|---|---|---|
| Limon ene concen tration (ppm) | Eugenol (ppm) | Stimulus of tingling aftertaste | Tastiness as beverage | Absorbance (λ = 550 nm) | Comment |
| 0.5 | 0.05 | +++ | + | 0.000 | The effect of masking tingling stimulus is not felt. |
| 1 | 0.1 | + | + | 0.001 | The effect of masking tingling stimulus is slightly felt. |
| 5 | 0.5 | ± | ++ | 0.001 | The effect of masking tingling stimulus is felt. The thickness is also slightly felt, and the beverage is tasty. |
| 10 | 1 | ± | +++ | 0.001 | The effect of masking tingling stimulus is felt. The thickness is also felt, and the beverage is tasty. |
| 20 | 2 | ± | +++ | 0.012 | The effect of masking tingling stimulus is felt. The thickness is also felt, and the beverage is tasty. |
| 30 | 3 | ± | +++ | 0.049 | The effect of masking tingling stimulus is felt. The thickness is also felt, and the beverage is tasty. |
| 40 | 4 | ± | +++ | 0.098 | The effect of masking tingling stimulus is felt. The thickness is also felt, and the beverage is tasty. |
| 50 | 5 | ± | ++ | 0.140 | The effect of masking tingling stimulus is felt. The thickness is also slightly felt, and the beverage is tasty. |
| 70 | 7 | ± | + | 0.217 | The effect of masking tingling stimulus is felt. The beverage remains tasty. |
| 80 | 8 | ± | ± | 0.265 | Although the effect of masking tingling stimulus is felt, a mint-like flavor is too strong. |

Even though eugenol was used, the same tendency as that of cinnamaldehyde was observed.

### (Experiment 4) Effect of carvacrol

The same experiment as Experiment 2 was performed except that carvacrol was used instead of cinnamaldehyde. The following tables show the results together with the absorbance at a wavelength of 550 nm (measured with a UV-1800 (SHIMADZU CORPORATION)).

**[Table 4-1]**

| Alcoholic beverage (Alcohol content: 15v/v%) | | | | | |
|---|---|---|---|---|---|
| Limon ene concen tration (ppm) | Carvacrol (ppm) | Stimulus of tingling aftertaste | Tastiness as beverage | Absorbance (λ = 550 nm) | Comment |
| 0.5 | 0.05 | +++ | + | 0.000 | The effect of masking tingling stimulus is not felt. |
| 1 | 0.1 | + | + | 0.000 | The effect of masking tingling stimulus is slightly felt. |
| 5 | 0.5 | ± | ++ | 0.004 | The effect of masking tingling stimulus is felt. The thickness is also slightly felt, and the beverage is tasty. |
| 10 | 1 | ± | +++ | 0.004 | The effect of masking tingling stimulus is felt. The thickness is also felt, and the beverage is tasty. |
| 20 | 2 | ± | +++ | 0.004 | The effect of masking tingling stimulus is felt. The thickness is also felt, and the beverage is tasty. |
| 30 | 3 | ± | +++ | 0.007 | The effect of masking tingling stimulus is felt. The thickness is also felt, and the beverage is tasty. |
| 40 | 4 | ± | +++ | 0.008 | The effect of masking tingling stimulus is felt. The thickness is also felt, and the beverage is tasty. |
| 50 | 5 | ± | ++ | 0.011 | The effect of masking tingling stimulus is felt. The thickness is also slightly felt, and the beverage is tasty. |
| 70 | 7 | ± | + | 0.065 | The effect of masking tingling stimulus is felt. The beverage remains tasty. |
| 80 | 8 | ± | ± | 0.098 | Although the effect of masking tingling stimulus is felt, a citrus-like fresh flavor is too strong. |
| 70 | 0.1 | + | + | 0.065 | The effect of masking tingling stimulus is slightly felt. |
| 1 | 7 | + | + | 0.000 | The effect of masking tingling stimulus is felt. The beverage remains tasty. |

**[Table 4-2]**

| Alcoholic beverage (Alcohol content: 5v/v%) | | | | | |
|---|---|---|---|---|---|
| Limon ene concen tration (ppm) | Carvacrol (ppm) | Stimulus of tingling aftertaste | Tastiness as beverage | Absorbance (λ = 550 nm) | Comment |
| 0.5 | 0.05 | +++ | + | 0.000 | The effect of masking tingling stimulus is not felt. |
| 1 | 0.1 | + | + | 0.001 | The effect of masking tingling stimulus is slightly felt. |
| 5 | 0.5 | ± | ++ | 0.001 | The effect of masking tingling stimulus is felt. The thickness is also slightly felt, and the beverage is tasty. |
| 10 | 1 | ± | +++ | 0.001 | The effect of masking tingling stimulus is felt. The thickness is also felt, and the beverage is tasty. |
| 20 | 2 | ± | +++ | 0.012 | The effect of masking tingling stimulus is felt. The thickness is also felt, and the beverage is tasty. |
| 30 | 3 | ± | +++ | 0.049 | The effect of masking tingling stimulus is felt. The thickness is also felt, and the beverage is tasty. |
| 40 | 4 | ± | +++ | 0.098 | The effect of masking tingling stimulus is felt. The thickness is also felt, and the beverage is tasty. |
| 50 | 5 | ± | ++ | 0.140 | The effect of masking tingling stimulus is felt. The thickness is also slightly felt, and the beverage is tasty. |
| 70 | 7 | ± | + | 0.217 | The effect of masking tingling stimulus is felt. The beverage remains tasty. |
| 80 | 8 | ± | ± | 0.265 | Although the effect of masking tingling stimulus is felt, a citrus-like fresh flavor is too strong. |

Even though carvacrol was used, the same tendency as that of cinnamaldehyde was observed.

### (Experiment 5) Effect of 2-phenyl-2-butenal

The same experiment as Experiment 2 was performed except that 2-phenyl-2-butenal (a mixture of the E-form and the Z-form, (E) + (Z), 97%, Thermo Fisher Scientific) was used instead of cinnamaldehyde. The following tables show the results.

**[Table 5-1]**

| Alcoholic beverage (Alcohol content: 15v/v%) | | | | |
|---|---|---|---|---|
| Limone ne (ppm) | 2-Phenyl-2-butenal (ppm) | Stimulus of tingling aftertaste | Tastiness as beverage | Comment |
| 0.5 | 0.05 | +++ | + | The effect of masking tingling stimulus is not felt. |
| 1 | 0.1 | + | + | The effect of masking tingling stimulus is slightly felt. |
| 5 | 0.5 | ± | ++ | The effect of masking tingling stimulus is felt. The thickness is also slightly felt, and the beverage is tasty. |
| 10 | 1 | ± | +++ | The effect of masking tingling stimulus is felt. The thickness is also felt, and the beverage is tasty. |
| 20 | 2 | ± | +++ | The effect of masking tingling stimulus is felt. The thickness is also felt, and the beverage is tasty. |
| 30 | 3 | ± | +++ | The effect of masking tingling stimulus is felt. The thickness is also felt, and the beverage is tasty. |
| 40 | 4 | ± | +++ | The effect of masking tingling stimulus is felt. The thickness is also felt, and the beverage is tasty. |
| 50 | 5 | ± | ++ | The effect of masking tingling stimulus is felt. The thickness is also slightly felt, and the beverage is tasty. |
| 70 | 7 | ± | + | The effect of masking tingling stimulus is felt. The beverage remains tasty. |
| 80 | 8 | ± | ± | Although the effect of masking tingling stimulus is felt, a citrus-like fresh flavor is too strong. |
| 70 | 0.1 | + | + | The effect of masking tingling stimulus is slightly felt. |
| 1 | 7 | + | + | The effect of masking tingling stimulus is felt. The beverage remains tasty. |

**[Tables 5-2]**

| Alcoholic beverage (Alcohol content: 5v/v%) | | | | |
|---|---|---|---|---|
| Limone ne concentr ation (ppm) | 2-Phenyl-2-butenal (ppm) | Stimulus of tingling aftertaste | Tastiness as beverage | Comment |
| 0.5 | 0.05 | +++ | + | The effect of masking tingling stimulus is not felt. |
| 1 | 0.1 | + | + | The effect of masking tingling stimulus is slightly felt. |
| 5 | 0.5 | ± | ++ | The effect of masking tingling stimulus is felt. The thickness is also slightly felt, and the beverage is tasty. |
| 10 | 1 | ± | +++ | The effect of masking tingling stimulus is felt. The thickness is also felt, and the beverage is tasty. |
| 20 | 2 | ± | +++ | The effect of masking tingling stimulus is felt. The thickness is also felt, and the beverage is tasty. |
| 30 | 3 | ± | +++ | The effect of masking tingling stimulus is felt. The thickness is also felt, and the beverage is tasty. |
| 40 | 4 | ± | +++ | The effect of masking tingling stimulus is felt. The thickness is also felt, and the beverage is tasty. |
| 50 | 5 | ± | ++ | The effect of masking tingling stimulus is felt. The thickness is also slightly felt, and the beverage is tasty. |
| 70 | 7 | ± | + | The effect of masking tingling stimulus is felt. The beverage remains tasty. |
| 80 | 8 | ± | ± | Although the effect of masking tingling stimulus is felt, a citrus-like fresh flavor is too strong. |

Even though 2-phenyl-2-butenal was used, the same tendency as that of cinnamaldehyde was observed.

Hereinafter, some aspects of the present invention will be described.
(1) An alcoholic beverage, containing limonene in an amount of 1 to 70 ppm and at least one compound selected from the group consisting of cinnamaldehyde, eugenol, and carvacrol, wherein the total content of the at least one compound is 0.1 to 7.0 ppm.
(2) The alcoholic beverage according to (1), containing limonene in an amount of 5 to 50 ppm.
(3) The alcoholic beverage according to (1) or (2), wherein an alcohol content is 1 to 15v/v%.
(4) A method for suppressing stimulus of a tingling aftertaste in an alcoholic beverage containing limonene in an amount of 1 to 70 ppm, including:
   mixing raw materials so that the beverage contains at least one compound selected from the group consisting of cinnamaldehyde, eugenol, and carvacrol, and the total content of the at least one compound in the beverage is 0.1 to 7.0 ppm.
(5) An alcoholic beverage, containing limonene in an amount of 1 to 70 ppm and 2-phenyl-2-butenal in an amount of 0.1 to 7.0 ppm.
(6) The alcoholic beverage according to (5), containing limonene in an amount of 5 to 50 ppm.
(7) The alcoholic beverages according to (5) or (6), wherein an alcohol content is 1 to 15v/v%.
(8) A method for suppressing stimulus of a tingling aftertaste in an alcoholic beverage containing limonene in an amount of 1 to 70 ppm, including:
   mixing raw materials so that the beverage contains 2-phenyl-2-butenal in an amount of 0.1 to 7.0 ppm.

## Claims

1. An alcoholic beverage, comprising limonene in an amount of 1 to 70 ppm and at least one compound selected from the group consisting of cinnamaldehyde, eugenol, 2-phenyl-2-butenal, and carvacrol, wherein the total content of the at least one compound is 0.1 to 7.0 ppm.

2. The alcoholic beverage according to claim 1, comprising limonene in an amount of 5 to 50 ppm.

3. The alcoholic beverage according to claim 1 or 2, wherein an alcohol content is 1 to 15v/v%.

4. A method for suppressing stimulus of a tingling aftertaste in an alcoholic beverage comprising limonene in an amount of 1 to 70 ppm, comprising:
mixing raw materials so that the beverage comprises at least one compound selected from the group consisting of cinnamaldehyde, eugenol, 2-phenyl-2-butenal, and carvacrol, and the total content of the at least one compound in the beverage is 0.1 to 7.0 ppm.
